# EUROPEAN PATENT APPLICATION

(11) **EP 2 579 089 A1**
(43) Date of publication of application: **10.04.2013**
(21) Application number: 11786371.2
(22) Date of filing: 31.01.2011
(51) Int. Cl.: G02F 1/13, G02B 27/22, G02F 1/133, G02F 1/13357

(54) **LIQUID-CRYSTAL DISPLAY DEVICE**

(30) Priority: 28.05.2010 JP 2010123457
(71) Applicant: Sharp Kabushiki Kaisha, Osaka-shi, Osaka 545-8522 (JP)
(72) Inventor: AJICHI, Yuhsaku, Osaka-shi, Osaka 545-8522 (JP); TOMIYOSHI, Akira, Osaka-shi, Osaka 545-8522 (JP)
(74) Representative: Müller - Hoffmann & Partner
(86) International application number: PCT/JP2011/051928
(87) International publication number: WO 2011/148671

(57) **Abstract**

Disclosed is a liquid crystal display device (10) which is provided with a liquid crystal display module including a liquid crystal display panel and a backlight unit, and at least one heat source (60) for heating the liquid crystal display panel, the liquid crystal display module being switchable between 2D display and 3D display, the heat source (60) generating heat during 3D display.

## Description

### Technical Field

The present invention relates to liquid crystal display devices, more specifically, a liquid crystal display device capable of displaying three dimensional (3D) images.

### Background Art

It has been known that a liquid crystal display device has a response characteristic which is dependent on temperature. Specifically, response speed of a liquid crystal material is temperature-dependent. More specifically, response speed of a liquid crystal material decreases as its temperature is lowered.

This is because viscosity of the liquid crystal material increases as its temperature decreases. In order to prevent the temperature reduction of the liquid crystal material, it has been proposed to provide a liquid crystal display device with a heater.

Patent Literature 1 discloses a technique for utilizing a backlight of a liquid crystal display device as a heater, so as to control turning-on duty of the liquid crystal display device. Specifically, the technique is to heat a liquid crystal material by means of radiation heat generated by lighting means of the backlight, so that the liquid crystal material is kept warm. This prevents the increase in viscosity of the liquid crystal material.

### Citation List

### Patent Literature

Patent Literature 1 Japanese Patent Application Publication Tokukaihei, No. 5-289058 (Publication Date: November 5, 1993)

### Summary of Invention

### Technical Problem

However, the above-described conventional technique has such a problem that it does not take special consideration needed for a liquid crystal display device which is switchable between general two dimensional (2D) display and three dimensional (3D) display. The following description will discuss the problem.

### (Stereoscopic Vision)

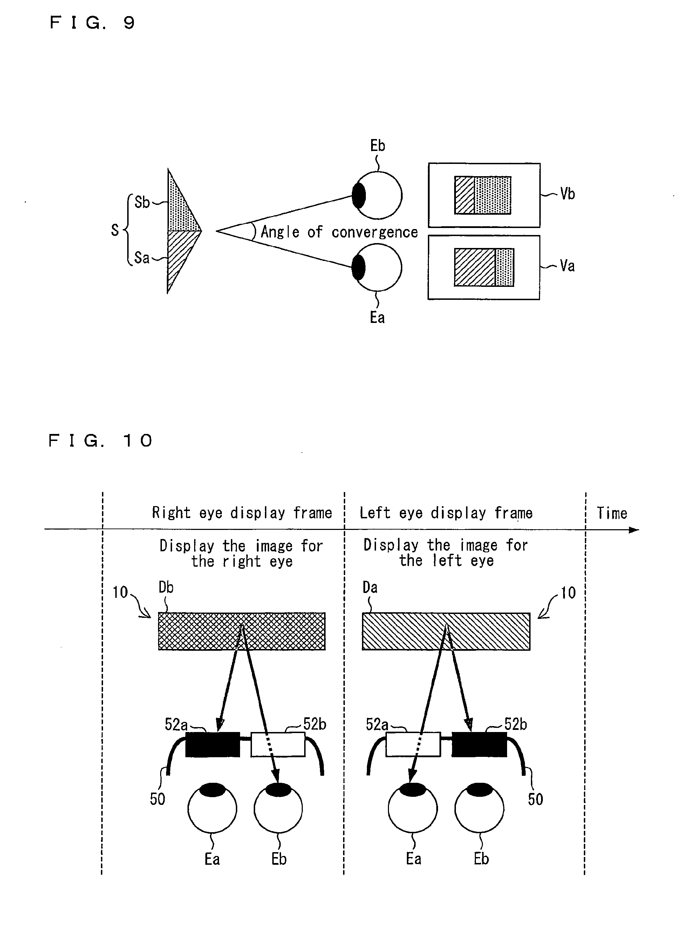

Fig. 9 is a diagram for explaining a principle of stereoscopic vision.

3D display utilizes stereoscopic vision in order to display an object three-dimensionally. The stereoscopic vision makes use of binocular parallax, which helps a human create a sense of a three dimensional space or depth.

Note here that binocular parallax refers to a difference between an image which enters the right eye and an image which enters the left eye. A human recognizes a sense of a three dimensional space by incorporating the images which respectively enter the right and left eyes into one image.

In other words, as illustrated in Fig. 9, when the human eyes see an object S, the left eye Ea sees an image Va which enters the left eye, whereas the right eye Eb sees an image Vb which enters the right eye.

The image Va which enters the left eye differs from the image Vb which enters the right eye. In the image Va which enters the left eye, a left side Sa of the object S represents a greater percentage than a right side Sb of the object S.

Whereas, in the image Vb which enters the right eye, the right side Sb of the object S represents a greater percentage than the left side Sa of the object S.

Consequently, by incorporating the different images, i.e. the image Va (which enters the left eye) and the image Vb (which enters the right eye) into one image, a human recognizes a sense of a three dimensional space.

### (Basic Configuration of a 3D Display Device)

The following description will discuss a basic configuration of a device for performing 3D display with reference to Fig. 10.

Fig. 10 is a diagram illustrating relations between images in 3D display and shutters of glasses (active glasses).

3D display is performed with the use of mainly (i) a liquid crystal display device 10 capable of displaying 3D images, and (ii) active glasses 50 worn by a viewer who views the liquid crystal display device 10.

The liquid crystal display device 10 displays an image Db for the right eye and an image Da for the left eye alternately in a time divisional manner, the image Db and the image Da having respective different parallax.

Specifically, a right eye display frame and a left eye display frame are arranged alternately in a time divisional manner. In the right eye display frame, the image Db for the right eye is displayed on a display section of the liquid crystal display device 10, whereas in the left eye display frame, the image Da for the left eye is displayed on the display section of the liquid crystal display device 10.

The active glasses 50 include liquid crystal shutters in both right and left lens parts. The liquid crystal shutters are opened alternately in sync with the respective corresponding image Db for the right eye and the image Da for the left eye, so as to separate (a) an image which will enter the right eye of the viewer from (b) an image which will enter the left eye of the viewer.

Specifically, in the right eye display frame, a left lens 52a of the active glasses 50 is closed whereas a right lens 52b is opened, so that the image Db for the right eye will enter the right eye Eb of the viewer.

Likewise, in the left eye display frame, the right lens 52b of the active glasses 50 is closed whereas the left lens 52a is opened, so that the image Da for the left eye will enter the left eye Ea of the viewer.

As described above, in 3D display, images which will enter the respective right and left eyes are separated from one another.

### (Problems in 3D Display)

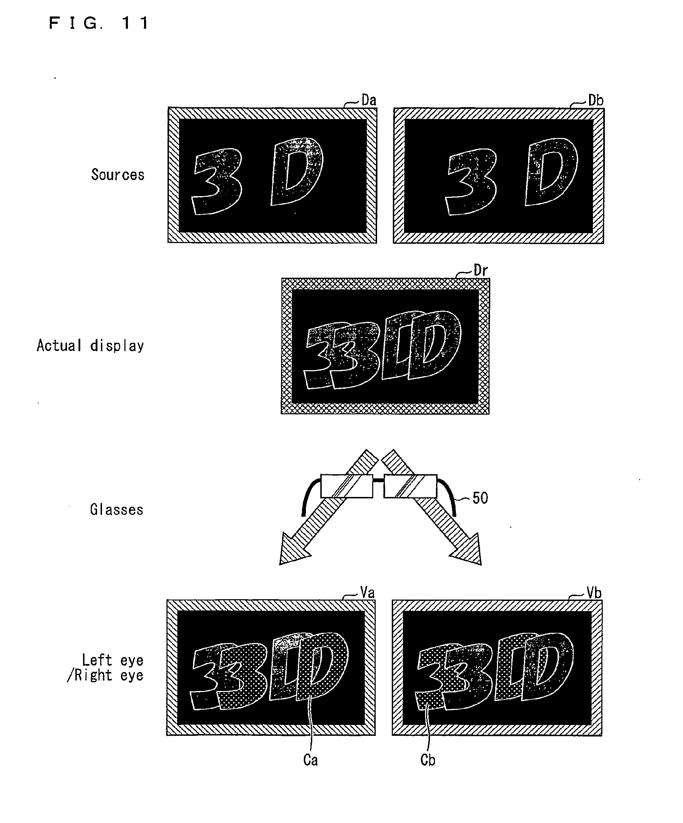

The following description will discuss problems in 3D display with reference to Fig. 11. Fig. 11 illustrates actual images and cross-talk caused in 3D display.

One of the problems in 3D display is that images which enter the human eyes include cross-talk images. The following description will discuss the problem.

As early described, in 3D display, different images are displayed in respective of the right eye display frame and the left eye display frame.

That is, as illustrated as "Sources" in Fig. 11, the image Da for the left eye and the image Db for the right eye have respective different pieces of image data (sources).

The image is switched over between the right eye display frame and the left eye display frame (see Fig. 10).

Note, however, that there may be a case where an image is displayed in which both the image Da for the left eye and the image Db for the right eye are mixed (see an actually displayed image Dr of "Actual Display" in Fig. 11).

This is caused because the image is not completely switched over between the right eye display frame and the left eye display frame due to the slow response speed of a liquid crystal material.

When the image Da for the left eye and the image Db for the right eye are mixed together, this leads to the cross-talk image. Specifically, when the image Db for the right eye is shown on the image Va which enters the left eye, the image Db for the right eye becomes a cross-talk Ca. On the other hand, when the image Da for the left eye is shown on the image Vb which enters the right eye, the image Da for the left eye becomes a cross-talk Cb (see Fig. 11).

The presence of the cross-talks Ca and Cb leads to deterioration in display quality in 3D display.

### (Relation to Backlight)

The deterioration in display quality in 3D display is more likely to be noticeable in association with a backlight which is controlled so as to be turned on/off.

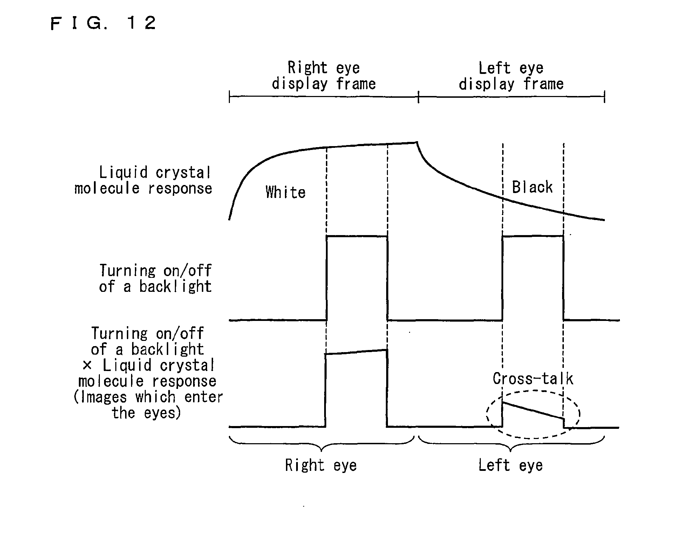

In this regard, the following description will be made with reference to Fig. 12. Fig. 12 is a diagram illustrating a state in which a backlight of a 3D display device is turned on/off, together with "Liquid crystal material response", and the like.

According to Fig. 12, white is displayed in a right eye display frame, and black is displayed in a subsequent left eye display frame.

The liquid crystal material has a slow response speed in the left eye display frame (see "Liquid crystal material response" in Fig. 12), so that no complete black is displayed from the beginning of the left eye display frame. In the left eye display frame, white display is slowly switched to black display. Display displayed in the first half of the left eye display frame is rather whitish. In the second half of the left eye display frame, the display which approaches complete black is displayed.

As such, since an image (black) for the left eye contains an image (white) for right eye, the above-described cross-talk is caused.

That is, when a white image for the right eye is switched to a black image for the left eye, the white image for the right eye is remained due to the slow response speed of the liquid crystal material or the like, although a shutter for the left eye of active glasses is opened at a timing at which the frame is switched. This causes the left eye to see, in addition to the image for the left eye, the image for the right eye (cross-talk).

Such cross-talk is more likely to be noticeable in a case where the backlight is controlled to be turned on/off in 3D display.

In general, response speed of a liquid crystal material is dependent on temperature. Namely, response speed of a liquid crystal material decreases as its temperature is lowered. The liquid crystal display device is typically provided with a backlight, whose light sources can be heat sources. That is, heat generated by the light sources can increase the temperature of the liquid crystal material.

In 3D display, the light sources are turned on for a shorter time than in the general 2D display. In other words, in 2D display, the light sources of the backlight are always turned on, whereas, in 3D display, the light sources are sometimes turned off.

That is, the respective right and left eye display frames include time periods in which the backlight is turned off (see "Turning on/off of a backlight" in Fig. 12). As the result, such time periods are arranged between the right eye display frame and the left eye display frame.

This measure is to make the cross-talk less visible for a viewer by turning off the backlight during a period in which the display is being switched from the image for the right eye to the image for the left eye.

As such, in 3D display, there is a time period(s) in which a backlight is turned off. Therefore, rise in temperature of a liquid crystal material is less significant in 3D display than in 2D display, the rise in temperature resulting from heat generated by the light sources.

As has been described, response speed of a liquid crystal material is more likely to lower in 3D display than in 2D display. As the result, the cross-talk is more likely to be noticeable in 3D display than in 2D display.

Note here that an image which enters the eyes of a viewer is an image under influences of "Turning on/off of a backlight" and "Liquid crystal material response". That is, an image as shown in "Turning on/off of a backlight x Liquid crystal material response" in Fig. 12 will enter the eyes of a viewer. In the left eye display frame, an image of not complete black but black having less and less intensity will enter the left eye, as cross-talk.

The present invention has been accomplished in view of the problem, and an object of the present invention is to provide a liquid crystal display device having reduced cross-talk in 3D display.

### Solution to Problem

In order to attain the above object, a liquid crystal display device of the present invention is a liquid crystal display device including: a liquid crystal display module including a liquid crystal display panel and a backlight unit; and at least one heat source for heating the liquid crystal display panel, the liquid crystal display module being switchable between 2D display and 3D display, the heat source generating heat during 3D display.

According to the configuration, the liquid crystal display module is heated by the heat source during 3D display. This allows the liquid crystal display panel to display images with increased response speed. As the result, cross-talk in the images is reduced.

### Advantageous Effects of Invention

As described above, the liquid crystal display device in accordance with the present invention includes: at least one heat source for heating the liquid crystal display panel; and the liquid crystal display module which is switchable between 2D display and 3D display, the heat source generating heat during the 3D display.

It is therefore possible to effectively attain a liquid crystal display device having reduced cross-talk in 3D display.

### Brief Description of Drawings

Fig. 1

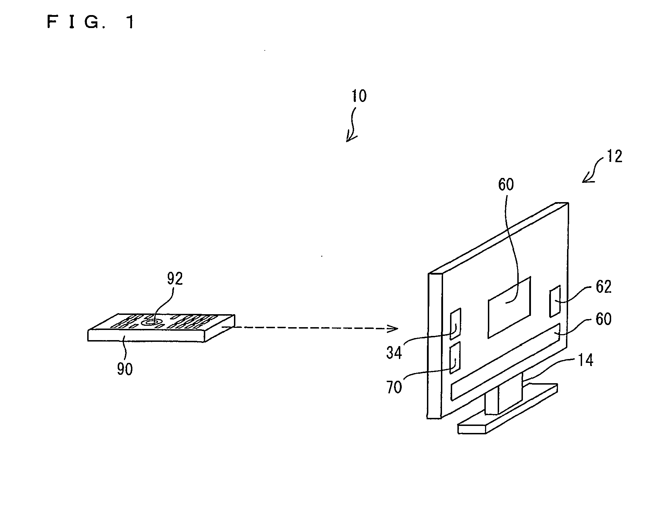

   Fig. 1 schematically illustrates a configuration of a liquid crystal display device in accordance with an embodiment of the present invention.
Fig. 2

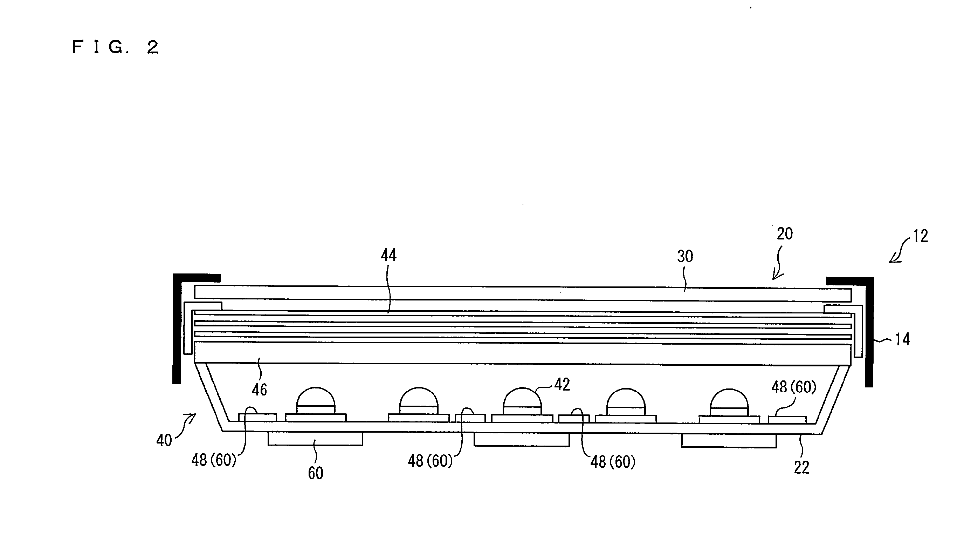

   Fig. 2 is a cross sectional view schematically illustrating a configuration of a liquid crystal display module in accordance with the embodiment of the present invention.
Fig. 3

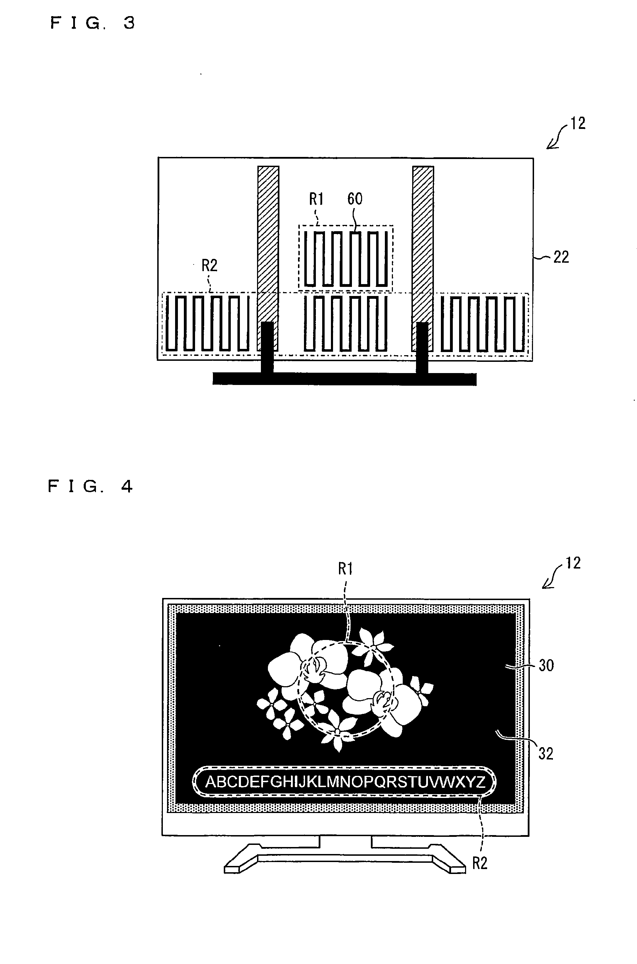

   Fig. 3 is a rear view illustrating a rear side of a liquid crystal display device main unit in accordance with the embodiment of the present invention.
Fig. 4
   Fig. 4 is a front view illustrating a front side of a liquid crystal display device main unit in accordance with the embodiment of the present invention.
Fig. 5

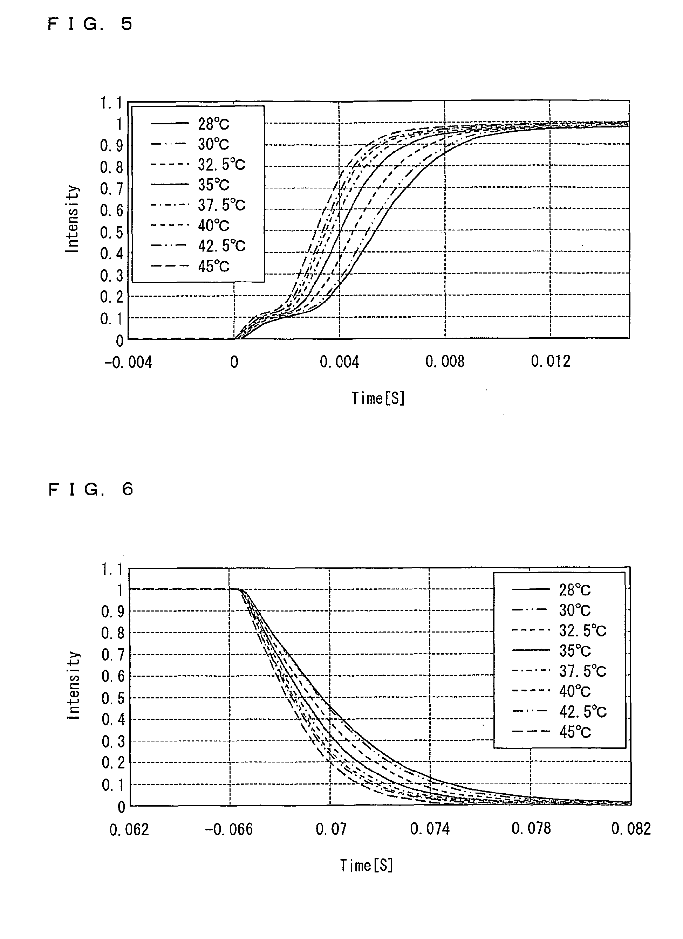

   Fig. 5 illustrates relations between temperatures of a liquid crystal material and response speeds of the liquid crystal material.
Fig. 6
   Fig. 6 illustrates relations between temperatures of a liquid crystal material and response speeds of the liquid crystal material.
Fig. 7

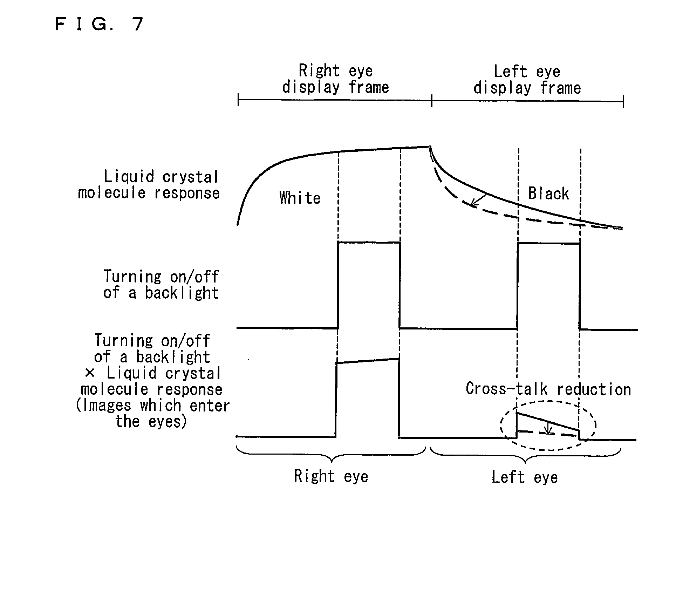

   Fig. 7 illustrates how cross-talk is reduced in accordance with the embodiment of the present invention.
Fig. 8

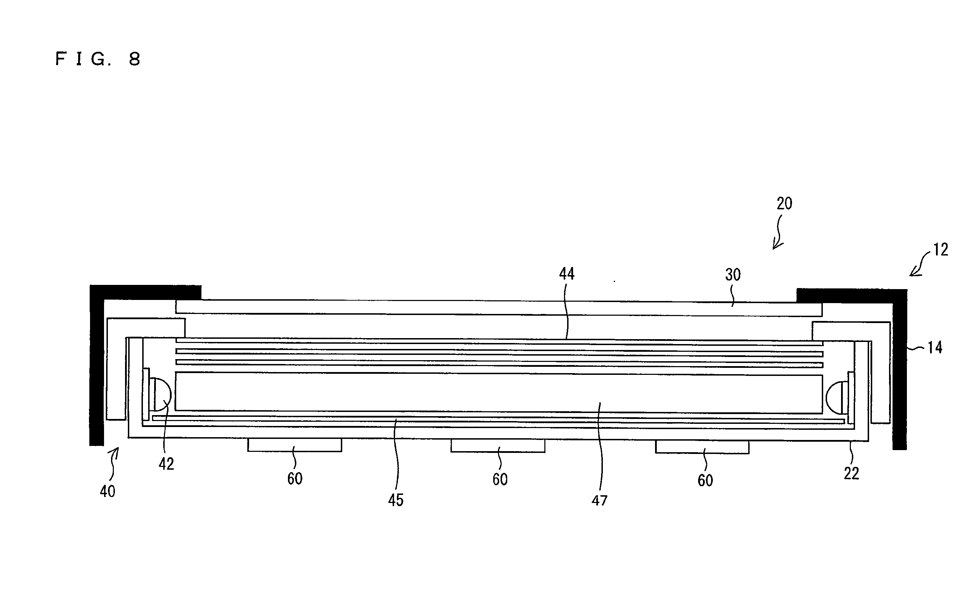

   Fig. 8 illustrates is a cross sectional view schematically illustrating a configuration of a liquid crystal display module in accordance with another embodiment of the present invention.
Fig. 9
   Fig. 9 is a diagram for explaining a principle of stereoscopic vision.
Fig. 10
   Fig. 10 is a diagram illustrating a basic configuration of a 3D display device.
Fig. 11
   Fig. 11 is a diagram illustrating a problem when a 3D image is displayed.
Fig. 12
   Fig. 12 is a diagram illustrating turned on/off of a backlight of a 3D display device.

### Description of Embodiments

The following description will discuss embodiments of the present invention in detail.

### [Embodiment 1]

Embodiment 1 of the present invention will be described with reference to Figs. 1 through 7.

### (Schematic Configuration)

Fig. 1 schematically illustrates a configuration of a liquid crystal display device in accordance with Embodiment 1 of the present invention.

As illustrated in Fig. 1, a liquid crystal display device 10 of Embodiment 1 includes a liquid crystal display device main unit 12 and a remote controller 90.

### (Liquid Crystal Display Device Main unit)

The liquid crystal display device main unit 12 includes a housing 14 in which a liquid crystal display module is provided.

The liquid crystal display device main unit 12 will be described specifically with reference to Fig. 2. Fig. 2 is a cross sectional view schematically illustrating a configuration of the liquid crystal display module.

As illustrated in Fig. 2, a liquid crystal display module 20 is provided within the housing 14.

The liquid crystal display module 20 is constituted by mainly a liquid crystal display panel 30 and a backlight unit 40.

In Embodiment 1, the backlight unit 40 is configured as a vertical backlight unit. Specifically, light sources 42 are provided behind the liquid crystal display panel 30.

Specifically, a plurality of LEDs (Light Emitting Diodes) is provided as the light sources 42 on a chassis 22. Further, a diffusion plate 46 and optical sheets 44 are provided in this order between the light sources 42 and the liquid crystal display panel 30.

### (Remote Controller)

The following description will discuss the remote controller 90. The remote controller 90 is a component for remote control of the liquid crystal display device main unit 12, more specifically, the liquid crystal display module 20.

The liquid crystal display device 10 is a display device capable of displaying both 2D and 3D images. That is, the liquid crystal display device 10 is a display device switchable between 2D display and 3D display.

The remote controller 90 includes an input section 92, such as a 3D mode button, through which switching between 2D display and 3D display is controlled.

### (Heat Source)

The liquid crystal display device 10 of Embodiment 1 is characterized in that the liquid crystal display device main unit 12 is provided with heat sources 60.

Namely, heaters which serve as the heat sources 60 are provided on a rear side of the liquid crystal display device main unit 12 (see Fig. 1).

More specifically, the heat sources 60 are provided on a rear side of the chassis 22 of the liquid crystal display device main unit 12 (see Fig. 2).

The heat source 60 is not limited to the specific one and can therefore be a heater which generates heat. For example, an electrically heated wire, a Peltier element, or a circuit board (such as a substrate on which a heat generating IC (Integrated Circuit) is mounted) can be employed as the heat source 60. Note that the heat sources 60 in Embodiment 1 refer to ones (heat generating elements) other than the light sources 42, though the light sources 42 can also generate heat.

Fig. 3 illustrates, as an example, a rear side of the liquid crystal display device main unit 12 of Embodiment 1. According to a configuration illustrated in Fig. 3, electrically heated wires are employed as the heat sources 60. Specifically, a plurality of electrically heated wires is provided as heaters on the chassis 22, each of which wires is folded many times so as to have a sheet-like form in rectangular parallelepiped shape.

### (Locations of Heat Sources)

Note that locations where the heat sources 60 are provided are not limited to ones illustrated in Figs. 1 through 3.

However, the heat sources 60 are preferably provided in locations illustrated in Fig. 4, in view of making it difficult for a viewer to recognize the above-described cross-talk. Fig. 4 illustrates a front side of the liquid crystal display device main unit 12 of Embodiment 1.

That is, it is preferable that the heat sources 60 are provided in locations which correspond to respective of a central part R1 and a lower part R2 of a screen 32 of a liquid crystal display panel 30 in the liquid crystal display device main unit 12.

Note here that the locations which correspond to the central part R1 and the lower part R2 of the screen 32 refer to ones illustrated in, for example, Fig. 3.

As illustrated in Fig. 3, the heat sources 60 are provided in locations, on the rear side of the liquid crystal display device main unit 12, i.e., on the chassis 22, which locations correspond to the central part R1 and the lower part R2 of the screen 32.

### (Cross-talk)

The following description will discuss why cross-talk is reduced by providing the heat sources 60, and why the heat sources 60 are preferably provided in the locations which correspond to the central part R1 and the lower part R2 of the screen.

As early described, cross-talk is caused due to slow response speed of the liquid crystal material. The response speed of the liquid crystal material is slower when the liquid crystal material has a greater viscosity. Meanwhile, the viscosity of the liquid crystal material increases as its temperature decreases. That is, in a case where the temperature of the liquid crystal material is low, its response speed is slow, thereby making it more likely for the cross-talk to occur.

As early described, a backlight in 3D display is not always turned on but turned off for certain time periods. Therefore, the temperature of the liquid crystal material decreases easier in 3D display than in 2D display. This is because, in 3D display, the light sources of the backlight generate less heat.

In the liquid crystal display device 10 of Embodiment 1, the heat sources 60 are provided in the liquid crystal display device main unit 12. Therefore, the temperature of the liquid crystal material will be increased by heat generated by the heat sources 60. Accordingly, the response speed of the liquid crystal material is not likely to be reduced. This allows reduction in cross-talk.

The following description will discuss why cross-talk is reduced with reference to Figs. 5 through 7. Figs. 5 and 6 illustrate respective relations between temperatures of a liquid crystal material and response speeds of the liquid crystal material, in which a lateral axis denotes time (S), and a vertical axis denotes intensity. Specifically, Fig. 5 illustrates a transition from black display to white display, whereas Fig. 6 illustrates a transition from white display to black display.

As is clear from Figs. 5 and 6, time required for the transition from black display to white display and time required for the transition from white display to black display become shorter as the temperature of the liquid crystal material increases. This means that the response speed of the liquid crystal material will increase with a rise in its temperature.

Further, the high response speed of the liquid crystal material will reduce cross-talk. The following description will discuss why cross-talk is reduced with reference to Fig. 7. Fig. 7 shows liquid crystal molecule response in the right and left eye display frames, images which will enter the eyes, and the like. Fig. 7 illustrates an example in which white is assumed to be first displayed in the right eye display frame, and black is assumed to be subsequently displayed in the left eye display frame.

As illustrated early in Fig. 6, higher temperature of the liquid crystal material accelerates illumination intensity reduction in the transition from white display to black display.

In Embodiment 1, the heat sources are provided, so that heat generated by the heat sources causes the temperature of the liquid crystal material to increase. Accordingly, the transition from white display to black display will be accelerated.

According to the liquid crystal display device of Embodiment 1, the liquid crystal material is heated with the use of the heat sources (see an arrow in the "liquid crystal molecule response" in the left eye display frame in Fig. 7), whereby the transition to black display requires a shorter time to attain the black display.

Therefore, cross-talk will be reduced as indicated by an arrow in the "Images which enter the eyes" in Fig. 7. The images are approximated by "Turning on/off of a backlight x Liquid crystal molecule response".

### (Arrangement of Heat Sources)

The following description will discuss relation between the reduction in cross-talk and arrangement of the heat sources.

As early described, it is preferable that the heat sources 60 are provided in locations which correspond to the respective central part R1 and the lower part R2 of the screen 32 of the liquid crystal display panel 30 in the liquid crystal display device main unit 12. The reason will be described below.

Cross-talk is likely to be noticeable in a part of the screen which part is more frequently viewed by a viewer who views the liquid crystal display device. This part is a central part of the screen. Therefore, when the response speed of the liquid crystal material is high in the central part of the screen, then a viewer easily recognizes a decrease in cross-talk.

Cross-talk is also easily viewed in another part of the screen where clear images, such as closed captions in a movie and telops, are displayed. Therefore, it is efficient in cross-talk reduction to increase response speed of the liquid crystal material also in the lower part of the screen, where closed captions or the like are often displayed.

This is the reason why improvement in cross-talk in the central part and the lower part of the screen leads to upgrading in quality of the liquid crystal display device which performs 3D display.

According to Embodiment 1, therefore, the heat source 60 are provided in locations which correspond to the respective central part R1 and the lower part R2 of the screen 32 of the liquid crystal display panel 30 in the liquid crystal display device main unit 12.

Note that the locations where the heat sources are provided are not limited to the above described ones. The locations can thus be modified suitably in accordance with a case where (i) a viewer views another part of the screen more frequently rather than the central part of the screen or (ii) the closed captions or the like are displayed in another part of the screen, such as a side part or an upper part thereof, rather than in the lower part of the screen.

### (Control of Heat Source)

The following description will discuss how to control the heat sources.

In Embodiment 1, the heat sources are controlled so as to generate heat only during 3D display.

Note here that the wording "during 3D display" does not necessarily mean "always throughout 3D display". It is possible to set, during 3D display, a time period(s) in which heat is generated suitably in accordance with the panel temperature, for example, which will be described later.

In this context, "generate heat only during 3D display" means that the heat sources do not generate heat during 2D display. It should be understood that "not generate heat" in this context means the heat sources are not controlled so as to intentionally generate heat. For example, (i) remaining heat after heat generation or (ii) heat generated by a general electric resistance (that is, heat which is non-intentionally generated) is not included here.

During 3D display, a backlight is not always turned on, but there is a time period(s) in which the backlight is turned off, as described above. This causes the temperature of the liquid crystal material to decreases easily, so that cross-talk is likely to be noticeable. This is the reason why the heat sources are controlled so as to generate heat only during 3D display.

Such a method for controlling the heat sources so that they generate heat only during 3D display is not limited to a specific one. Examples of such a method will be described below.

### (Example 1 for Controlling the Heat Sources)

A first example for controlling the heat sources refers to a method for controlling them in accordance with an image source for an image to be displayed.

In order to carry out such a control method, the liquid crystal display device main unit 12 is provided with (i) a heat source control section 62 for controlling the heat sources 60 so that they do/do not generate heat, and (ii) an image source determination section 70 (see, for example, Fig. 1).

The image source determination section 70 determines whether or not an image source (image data) is of a 2D image or of a 3D image to be displayed. When (while) the determination result shows that the source is of a 3D image, the heat source control section 62 controls, in accordance with the determination, the heat sources 60 so that they generate heat.

When the determination results shows display has been switched from a 3D image to a 2D image, the heat source control section 62 controls, in accordance with the determination, the heat sources 60 so that they stop generating heat.

### (Example 2 for Controlling the Heat Sources)

A second example for controlling the heat sources will be described. Example 2 refers to a method for controlling the heat sources in accordance with input inputted through the remote controller 90 which has been described early.

The remote controller 90 includes an input section 92 through which a viewer controls switching between 2D display and 3D display. When a viewer inputs through the input section 92 an instruction instructing to perform 3D display, the heat source control section 62 controls, in response to the inputted instruction, the heat sources 60 so that they generate heat.

In contrast, when a viewer inputs through the input section 92 an instruction instructing to switch from 3D display to 2D display, the heat source control section 62 controls, in response to the inputted instruction, the heat sources 60 so that they stop generating heat.

### (Combination of Examples 1 and 2)

Note that it is not necessary to select either Example 1 or 2, but possible to use a combination of Examples 1 and 2.

The heat sources 60 can be controlled more appropriately (so as to generate heat) by means of the combination of Examples 1 and 2, for example, in a case where an image source of a 2D image is converted to that of a 3D image and is displayed as a 3D image, in response to an instruction inputted through the remote controller 90 to switch from 2D display to 3D display.

Similarly, the heat sources 60 can be controlled more appropriately (so as not to generate heat) by means of the combination of Examples 1 and 2, for example, in a case where, conversely, an image source of a 3D image is converted to that of a 2D image and is displayed as a 2D image, in response to an instruction inputted through the remote controller 90, the instruction instructing to switch from 3D display to 2D display, because of, for example, a viewer's preference.

### (Panel Temperature)

The following description will discuss the relation between the temperature of the liquid crystal display panel (panel temperature) and control of the heat sources.

It is possible to associate the above-described control of the heat sources 60 with the panel temperature. The occurrence of cross-talk is dependent on the temperature of the liquid crystal material, that is, the temperature of the liquid crystal material correlates with the panel temperature.

In order to control the heat sources 60 in association with the panel temperature, the liquid crystal display device main unit 12 includes, for example, a panel temperature sensor 34 for sensing the temperature of the liquid crystal display panel (see Fig. 1).

In a case where the panel temperature sensor 34 senses a temperature of not more than a given temperature, such as a temperature of not more than 40°, the heat sources 60 are controlled to generate heat. That is, the heat source control section 62 controls the heat sources 60 so that they generate heat when the panel temperature sensor 34 senses a temperature of not more than 40° during 3D display.

Even during 3D display, the heat source control section 62 controls the heat sources 60 so that they do not generate heat when the panel temperature sensor 34 senses a temperature more than 40°.

Note here that 40° is an example, and therefore the temperature can be set appropriately in accordance with the response characteristic of the liquid crystal material.

### (Another configuration)

The description above has discussed a configuration in which the heat sources 60 are provided on a rear side of the liquid crystal display module 20, more specifically, on a rear side of the chassis 22.

Note, however, that the locations where the heat sources 60 are provided are not limited to the rear side of the chassis 22, and can therefore be provided, for example, within the chassis 22.

According to the configuration in which the heat sources 60 are provided within the chassis 22, control substrates 48 of the backlight unit 40, which serve as the heat sources 60, can be provided within the chassis 22. In this case, a substrate on which a heat generating IC, for example, is mounted can preferably be employed as the control substrate 48.

The heat sources 60 can be provided either on the rear side of or within the chassis 22. Alternatively, the heat sources 60 can be provided both on the rear side of and within the chassis 22.

Further alternatively, the heat sources 60 can be provided not on or within the chassis 22, but at a place other than there. Specifically, the heat sources 60 can be provided, for example, on the liquid crystal display panel 30.

The heat sources 60 can be controlled so as to consume more electric power during 3D display than during 2D display.

By controlling the heat sources 60 in such a manner, it is possible to heat the liquid crystal display panel 30 to a higher temperature during 3D display than during 2D display, even in a case where the heat sources are turned on also through 2D display. Specific examples of the heat sources 60 include a timing controller for the liquid crystal panel and a circuit board, such as a power supply substrate.

### [Embodiment 2]

The following description will discuss Embodiment 2 of the liquid crystal display device of the present invention with reference to Fig. 8. Fig. 8 is a cross sectional view schematically illustrating a configuration of a liquid crystal display module.

For convenience, the same reference numerals are given to the members having the same functions as those of the members of Embodiment 1 and their descriptions are omitted.

In Embodiment 1, the backlight unit 40 is configured as a vertical type backlight unit. In contrast, in Embodiment 2, the backlight unit 40 is configured as an edge type backlight unit.

That is, as illustrated in Fig. 8, LEDs as light sources 42 are provided on both sides (edges) of a chassis 22. Further, a reflecting sheet 45 is provided on a bottom surface of the chassis 22, and a light guide plate 47 and various types of optical sheets 44 are stacked on the reflecting sheet 45.

According to Embodiment 2, the heat sources 60 are provided on a rear side of the chassis 22.

In a case of the edge type backlight unit 40, it is preferable to provide the reflecting sheet 45 on the bottom surface of the chassis 22 as described above. Accordingly, it is preferable to provide the heat sources 60 not within the chassis 22 (on the bottom surface of the chassis) but on the rear side of the chassis 22.

The above descriptions have discussed configurations in which LEDs are used as the light sources 42. Note, However, that the type of the light sources 42 is not limited to an LED and therefore other light sources such as fluorescent light tubes or EL (Electro Luminescence) can be used as the light sources 42.

Further, the above descriptions have discussed configurations in which the liquid crystal display device 10 is provided with the remote controller 90. Note, however, that the remote controller 90 is not an essential component. It is also possible to configure the liquid crystal display device 10 which includes merely the liquid crystal display device main unit 12.

The present invention is not limited to the above-described embodiments and various modifications are possible within the scope of the patent claims. Other embodiments obtained by appropriately incorporating technical means disclosed in the embodiments are included in the technical scope of the present invention.

The liquid crystal display device of the present invention is characterized in that: the heat source consumes more electric power during 3D display than during 2D display.

According to the configuration, during 2D display, the response speed for the display is relatively high, so that the heat source consumes less electric power.

Therefore, even if the heat source is also turned on during 2D display, it is possible to heat the liquid crystal display panel to a higher temperature during 3D display than during 2D display.

The liquid crystal display device of the present invention is characterized in that it further comprises: an image source determination section; and a heat source control section, the image source determination section determining whether an image source is of a 2D image or of a 3D image, the heat source control section controlling the heat source so that the heat source generates heat when the image source determination section determines that the image source is of a 3D image.

According to the configuration, it is possible to control the heat source precisely and easily in accordance with the type of the image sources.

The liquid crystal display device of the present invention is characterized in that it further includes: a remote controller by which the liquid crystal display module is operated; and a/the heat source control section, the remote controller including an input section (for example a 3D mode button) through which the liquid crystal display module is controlled so as to switch over between 2D display and 3D display, the heat source control section controlling the heat source so that the heat source generates heat in response to an instruction to perform 3D display, the instruction being inputted through the input section.

According to the configuration, it is possible to (i) make the liquid crystal display device to display an image in accordance with a viewer's preference, and (ii) correspondingly control the heat source so as to display the image.

The liquid crystal display device of the present invention is characterized in that it further includes: a panel temperature sensor for sensing a temperature of the liquid crystal display panel; and a/the heat source control section, the heat source control section controlling the heat source so that the heat source generates heat when the panel temperature sensor senses a temperature of not more than 40°.

According to the configuration, it is possible to control the heat source so that it generates heat when the liquid crystal display panel (i) has a low temperature and (ii) is required to be heated by the heat source. This allows suppressing the electric power consumption.

The liquid crystal display device of the present invention is characterized in that: the heat source does not generate heat during 2D display.

According to the configuration, the heat source does not generate heat in a 2D display period in which the response speed for the display is relatively high. This allows suppressing the electric power consumption.

The liquid crystal display device of the present invention is characterized in that: a difference in temperature of the liquid crystal display panel between during 2D display and during 3D display is reduced by means of the heat generated by the heat source.

The liquid crystal display device of the present invention is characterized in that: a difference in response speed between in 2D display and in 3D display is reduced by means of the heat generated by the heat source.

The liquid crystal display device of the present invention is characterized in that: the heat source is provided in a location(s) which correspond to at least one of a central part and a lower part of a screen of the liquid crystal display panel.

According to the configuration, the heat source is provided in at least one part where cross-talk is likely to be noticeable. It is thus possible to efficiently reduce cross-talk by heating.

The liquid crystal display device of the present invention is characterized in that the heat source is provided on a rear side of the liquid crystal display module.

According to the configuration, the heat source can easily be provided in any location.

The liquid crystal display device of the present invention is characterized in that: the backlight unit includes at least one control substrate which serves as the heat source.

According to the configuration, it is possible to heat the liquid crystal display module without providing another member as the heat source.

The liquid crystal display device of the present invention is characterized in that: the heat source is of at least one type selected from electrically heated wires, Peltier elements, and circuit boards.

According to the configuration, a thin heat source can easily be obtained. This allows easily suppressing increase in thickness of the liquid crystal display device.

### Industrial Applicability

The present invention is applicable to a display device which displays 3D images.

### Reference Signs List

- 10: Liquid crystal display device
- 12: Liquid crystal display device main unit
- 14: Housing
- 20: Liquid crystal display module
- 22: Chassis
- 30: Liquid crystal display panel
- 32: Screen
- 34: Panel temperature sensor
- 40: Backlight unit
- 42: Light source
- 44: Optical sheet
- 45: Reflecting sheet
- 46: Diffusion plate
- 47: Light guide plate
- 48: Control substrate
- 50: Active glasses
- 52a: Left lens
- 52b: Right lens
- 60: Heat source
- 62: Heat source control section
- 70: Image source determination section
- 90: Remote controller
- 92: Input section
- Ea: Left eye
- Eb: Right eye
- Ca: Cross-talk
- Cb: Cross-talk
- Da: Image for the left eye
- Db: Image for the right eye
- Dr: Actually displayed image
- S: Object
- Sa: Left side of the object
- Sb: Right side of the object
- V: Images which enter the eyes
- Va: Image which enters the left eye
- Vb: Image which enters the right eye
- R1: Central part of the screen
- R2: Lower part of the screen

## Claims

1. A liquid crystal display device comprising:
a liquid crystal display module including a liquid crystal display panel and a backlight unit; and
at least one heat source for heating the liquid crystal display panel,
the liquid crystal display module being switchable between 2D display and 3D display,
the heat source generating heat during 3D display.

2. The liquid crystal display device as set forth in claim 1, wherein:
the heat source consumes more electric power during 3D display than during 2D display.

3. The liquid crystal display device as set forth in claim 1 or 2, further comprising:
an image source determination section; and a heat source control section, the image source determination section determining whether an image source is of a 2D image or of a 3D image,
the heat source control section controlling the heat source so that the heat source generates heat when the image source determination section determines that the image source is of a 3D image.

4. The liquid crystal display device as set forth in any one of claims 1 through 3, further comprising:
a remote controller by which the liquid crystal display module is operated; and
a/the heat source control section,
the remote controller including an input section through which the liquid crystal display module is controlled so as to switch over between 2D display and 3D display,
the heat source control section controlling the heat source so that the heat source generates heat in response to an instruction instructing to perform 3D display, the instruction being inputted through the input section.

5. The liquid crystal display device as set forth in any one of claims 1 through 4, further comprising:
a panel temperature sensor for sensing a temperature of the liquid crystal display panel; and
a/the heat source control section,
the heat source control section controlling the heat source so that the heat source generates heat when the panel temperature sensor senses a temperature of not more than 40°.

6. The liquid crystal display device as set forth in any one of claims 1 through 5, wherein:
the heat source does not generate heat during 2D display.

7. The liquid crystal display device as set forth in any one of claims 1 through 6, wherein:
a difference in temperature of the liquid crystal display panel between during 2D display and during 3D display is reduced by means of the heat generated by the heat source.

8. The liquid crystal display device as set forth in any one of claims 1 through 6, wherein:
a difference in response speed between in 2D display and in 3D display is reduced by means of the heat generated by the heat source.

9. The liquid crystal display device as set forth in any one of claims 1 through 8, wherein:
the heat source is provided in a location(s) which correspond to at least one of a central part and a lower part of a screen of the liquid crystal display panel.

10. The liquid crystal display device as set forth in any one of claims 1 through 9, wherein:
the heat source is provided on a rear side of the liquid crystal display module.

11. The liquid crystal display device as set forth in any one of claims 1 through 10, wherein:
the backlight unit includes at least one control substrate which serves as the heat source.

12. The liquid crystal display device as set forth in any one of claims 1 through 10, wherein:
the heat source is of at least one type selected from electrically heated wires, Peltier elements, and circuit boards.
